# EUROPEAN PATENT SPECIFICATION

(11) **EP 2 440 382 B1**
(45) Date of publication and mention of the grant of the patent: **20.02.2013**
(21) Application number: 09787753.4
(22) Date of filing: 12.06.2009
(51) Int. Cl.: B29C 45/16, B29C 45/14, B29L 31/58

(54) **MOULDING METHOD OF A COMPONENT**
VERFAHREN ZUM SPRITZGIESSEN EINES BAUTEILS
PROCEDE DE MOULAGE D'UN COMPOSANT

(43) Date of publication of application: 18.04.2012
(73) Proprietor: Uniteam Italia S.r.L., 30020 Quarto d'Altino Venezia (IT)
(72) Inventor: FIAMMENGO, Fabio, I-31021 Mogliano Veneto Treviso (IT)
(74) Representative: Mitola, Marco
(86) International application number: PCT/IT2009/000259
(87) International publication number: WO 2010/143213

(56) References cited:
- FR-A1- 2 751 582
- JP-A- 7 276 425
- US-A- 6 004 497
- US-A- 6 054 087

## Description

The present invention relates to the moulding method of a component. Document FR-A-2751582 discloses a method in accordance with the preamble of claim 1.

It is known of in the art to make moulded components comprising a body and a covering or insert, for example in fabric or leather, joined at least partially to the body.

According to the technique known by the name of 'back injection', the insert is fitted onto the die of the mould using hooks positioned outside the injection chamber; so that the surface of the insert is always bigger than the surface of the component body.

The mould is closed therefore blocking the insert at its respective fastenings and the plastic material is injected from the back so as to press the insert against the die of the mould, making the insert adapt to said mould.

The pressure of the injection is such as not to pierce the covering of faux fabric or faux leather which is therefore solidly joined to the component body.

When the moulding cycle is completed, the piece is sent to a (laser or manual) cutting station to eliminate the part of the covering excess to the outline of the component body; lastly the piece is sent to a (manual or automatic) gluing or attachment station to "steal" the free edges of the covering onto the back of the piece, for example by gluing or stapling.

The state of the art technique presents numerous drawbacks and limitations.

First of all, the considerable production waste. Moreover, the known state of the art method foresees various processing phases essentially connected with removal of the strips of covering in excess of the body outline, following extraction of the piece from the mould.

High processing costs due overall to the time, waste, and presence of specific cutting stations of the covering result.

The purpose of the present invention is to resolve the drawbacks mentioned with reference to the known technique.

Such drawbacks are resolved by a method according to claim 1.

Other embodiments of the method and of the component according to the invention are described in the subsequent claims.

Further characteristics and advantages of the present invention will be more easily comprehended from the description below, made by way of a preferred, non-limiting example of embodiment, wherein:

Figures 1-5 shows schematic cross-section views of successive moulding phases of a component according to the method of the present invention;

Figure 6 shows an enlarged view of a part of a mould according to the present invention.

With reference to the aforesaid figures reference numeral 4 globally denotes a mould for injection moulding, specifically for the production of a component 8.

The component 8 comprises a component body 12 having a first portion 16 and a second portion 20, and an insert 24 able to cover at least partially said component body 12.

The mould 4 comprises a die 28 and a punch 32 reciprocally moving according to an axial direction X-X of opening/closing of the mould 4.

The die 28 and the punch 32, in a closed configuration, define a first and a second injection chamber 36,40 which respectively reproduce in negative the first and the second portion 16,20 of the component body 12 to be moulded.

The injection chambers 36,40 are defined by the die 28 and the punch 32, and are beside each other.

According to one embodiment, said insert 24 is a sheet of fabric and/or faux leather able to cover the moulded component 8 at least partially.

Said insert 24 may also be a reinforcement element of the component 8, such as a mesh, a preliminary mould and/or metal sheet.

According to one embodiment, the insert 24 is attached to the inside of the mould 4 by means of a suction device 44 able to create negative pressure between an attachment portion 48 of the insert 24 and the punch 32.

According to a further embodiment, the insert 24 is blocked inside the mould 4 by a moving block 52 which clamps it for example to the punch 32 at an attachment portion 48 of the insert 24.

According to one embodiment, the die 28 of the mould 4 comprises a separation wall 56 between the first and second injection chamber 36,40; as better described below, the wall 56 influences the insert 24 and co-operates with it to prevent the passage of the injected material between the first and the second injection chamber 36,40.

The mould 4 comprises, in addition, a moving cursor 60 able to tauten the insert 24 inside the mould 4. The cursor 60 co-operates with the wall 56 and with the insert 24 to insulate the two injection chambers 36,40 from each other.

According to one embodiment, the cursor 60 is aligned with the wall 56 so that, in an extracted configuration, it forms, with the insert 24 a barrier to the passage of the first injection in the second injection chamber 40.

The cursor 60 is fitted with at least one nipper 64 positioned on a work head 68 which comes into contact with the insert 24 in the extracted configuration of the cursor 60, to make at least one hole on the insert 24.

According to one embodiment, the cursor 60 comprises at least one tooth 72 able to grasp the insert 24, so as to facilitate the phase of tautening the insert 24 and of making through holes on the insert 24.

Preferably, the cursor 60 is positioned between the wall 56 and the attachment portion 48 of the insert 24.

In other words, in the closed configuration of the mould 4, the insert 24 is blocked both by the punch 32, at the attachment portion 48, and by the wall 56.

The cursor 60, by means of the work head 68, acts on the portion of insert projecting between the punch 32 and the wall 56, tautening it and making the holes using nippers 64.

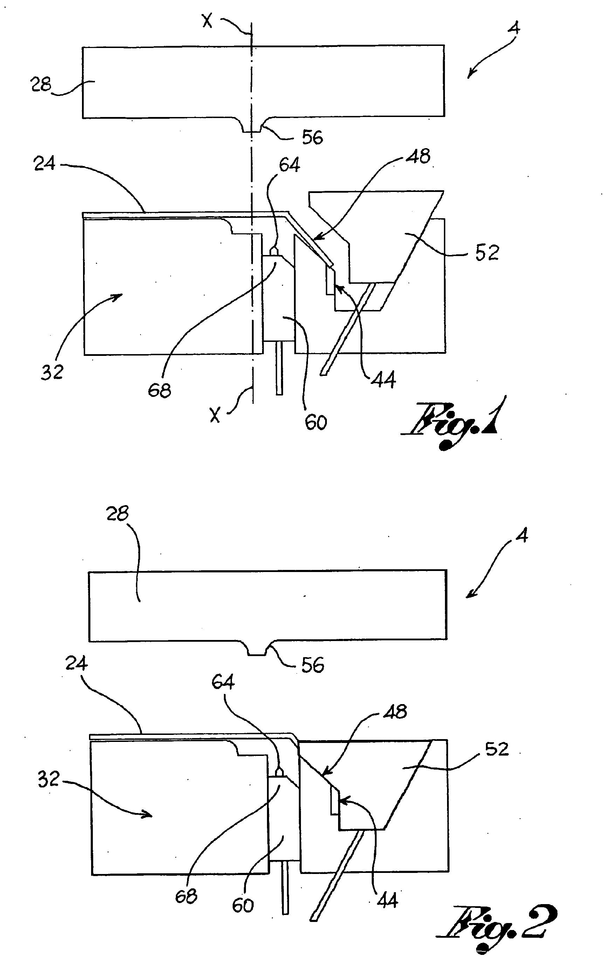

The method of the present invention comprises the phases of positioning the insert 24 inside the first injection chamber 36, for example resting it on the punch 32 at the first injection chamber 36 (figure 1).

The insert 24 is then blocked into position by the suction device 44 and/or moving block 52 which is made to hit against the punch 32, pinching it in the middle of the attachment portion 48 of the insert 24 (figure 2).

The insert 24 is predisposed so as to separate the first injection chamber 36 from the second injection chamber 40 which reproduces in negative the second portion 20 of the component body 12 to be moulded.

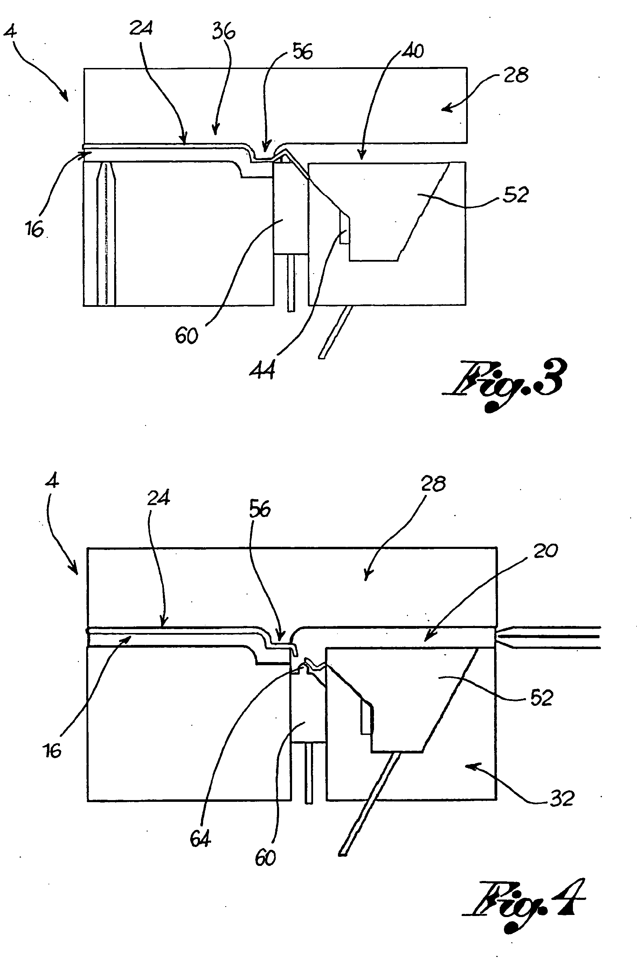

The first injection of plastic material is made inside the first injection chamber 36. Preferably, the first injection is made from the side of the punch 32 so as to fill the first injection chamber 36 and compress the insert 24 against the die 28, joining the insert 24 at the first injection (figure 3) .

During the first injection, the cursor 60 is in an extracted position so as to tauten the insert 24 pinched between the wall 56 and the block 52.

Preferably, the cursor itself advances so as to form a barrier to the passage of the first injection which remains confined in the first injection chamber 36.

Following the first injection, at least one hole is made in the portion of insert occupying the second injection chamber 40, so as to put the second injection chamber 40 in communication with the first moulded portion 16.

Preferably, the holes in the insert 24 are made by the nippers 64 placed on the work head 68 of the cursor 60 during the extraction of the cursor 60 to tauten the insert 24 (figure 3).

The tautening of the insert is in turn facilitated by the teeth 72 placed on the cursor 60 which catch in the insert and pull it with the movement of the cursor 60.

After the solidification of the first injection, the cursor 60 moves rearwards so as to free the holes made by the nippers 64 on the insert, and the second injection of plastic material is made inside the second injection chamber 40. In this phase, the cursor 60 defines the second injection chamber 40, together with the die 28 and the punch 32.

The injected material traverses at least one hole so as to join the second moulded portion 20 to the first moulded portion 16 and to include the portion of insert 24 lodged in the second chamber (figure 4).

Specifically, the second injection may cause breakage of the insert 24 at the holes previously made; in any case the torn edges of the insert 24 are included in the second injection.

The second injection is made directly into the second injection chamber 40, for example on the side opposite the wall 56 which defines the first and the second injection chamber 36,40.

The first and the second injections are made injecting plastic materials compatible with each other, so as to produce adhesion between the first and second portions 16,20 of the component body 12. In other words, the second injection traverses the holes in the insert and joins with the first portion 16 creating the moulded component in a single piece.

After having made the second injection, the mould 4 is opened and the component 4 expelled in a single piece, comprising the first portion 16, the insert 24 and the second portion 20.

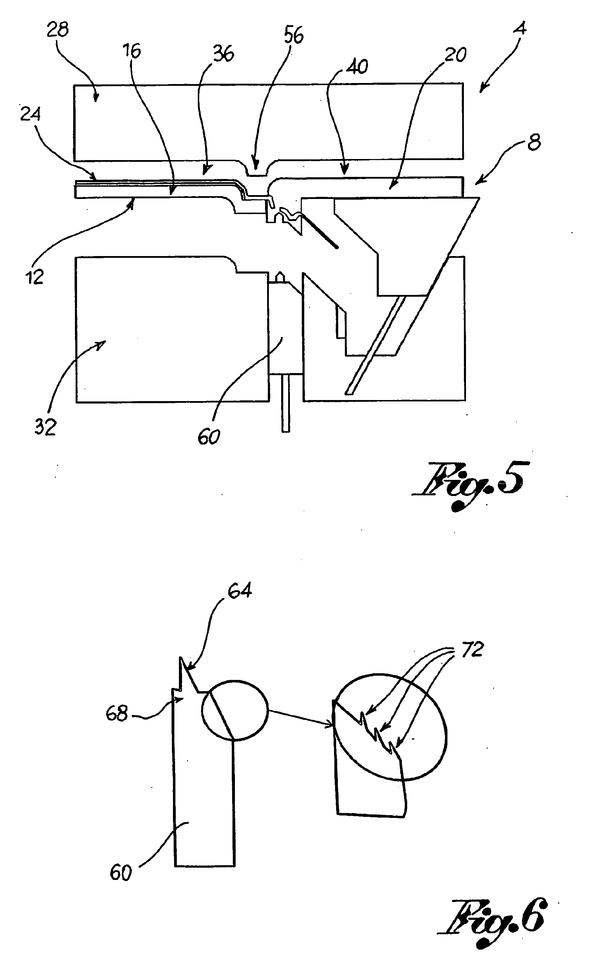

For example, the expulsion phase of the component 8 from the mould 4 may be facilitated by the block 52 (figure 5).

As may be seen from the description, the method of the present invention makes it possible to overcome the drawbacks presented in the known technique.

Advantageously, the piece moulded according to the present invention, once extracted from the mould requires no further processing and is ready for assembly.

In fact the edges of insert comprised between the first and the second portion are directly included in the second injection; any edges not included are in any case located on the inner side of the component, that is on the side opposite the insert and therefore not on view, thereby requiring no subsequent removal operations. All the manual or automatic cutting phases subsequent to extraction of the piece from the mould are thus eliminated.

As a result, the piece extracted from the mould is already ready for assembly in that it requires no further processing in terms of cutting or attachment to any other part.

This way production costs and times of moulded pieces comprising coverings are considerably reduced.

The spheres of application of the present invention are varied. For example, bodywork parts of vehicles may be made, such as door panel parts or car mouldings.

In addition, it is also possible to make parts such as airbag pieces, where the mesh holding the cover which explodes after the airbag opens, is used as the insert.

It is also possible to make parts such as engine sheaths, where a preliminary mould or metal sheet is used as the insert.

## Claims

1. Moulding method of a component (8) composed of a component body (12) and at least one insert (24) suitable for including at least partially in the component body (12), the method comprising the phases of:
- predisposing a mould (4) comprising at least one die (28) and one punch (32) which, in a closed configuration, define a first injection chamber (36) which respectively reproduces in negative a first portion (16) of the component body (12) to be moulded,
- positioning an insert (24) inside the first injection chamber (36),
- predisposing the insert (24) so as to use it to separate the first injection chamber (36) from a second injection chamber (40) reproducing in negative a second portion (20) of the component body (12) to be moulded, the second injection chamber (40) being defined by the die (28) and by the punch (32) and being beside the first injection chamber (36),
- making a first injection of plastic material inside the first injection chamber (36),
- making at least one hole in said insert (24) so as to put the second injection chamber (40) into communication with the first moulded portion (16),
- making a second injection of plastic material inside the second injection chamber (40), the injected material traversing at least one hole so as to join the second moulded portion (20) to the first moulded portion (16) and to include the insert portion (24) lodged in the second injection chamber (40), wherein the mould (4) comprises a moving cursor (60), able to tauten the insert (24) inside the mould (4), the method being **characterised in that**
said cursor (60) is fitted with at least one nipper (64) on a work head (68), so that in the extracted configuration it makes at least one hole in the insert (24).

2. Method according to claim 1, wherein said insert (24) is a sheet of fabric and/or faux leather able to cover the moulded component (8) at least partially.

3. Method according to claim 1, wherein said insert (24) is a reinforcement element of the component (8), such as a mesh, preliminary moulding and/or metal sheet.

4. Method according to claim 1, 2 or 3, wherein said insert (24) is attached inside the mould (4) by means of at least one suction device (44) able to create negative pressure between an attachment portion (48) of the insert (24) and the punch (32).

5. Method according to any of the previous claims, wherein the insert (24) is attached by means of a moving block (52) which clamps it to the punch (32) at an attachment portion (48).

6. Method according to any of the previous claims, wherein the die (28) comprises a separation wall (56) between the first and the second injection chamber (36,40), said wall (56) influencing the insert (24) and co-operating with it to prevent the passage of injected material from the first to the second chamber (36,40).

7. Method according to claim 6 dependent on claim 1, wherein the cursor (60) co-operates with the wall (56) and the insert (24) to insulate the two injection chambers (36,40) between them.

8. Method according to claim 7, wherein the cursor (60) is aligned with the wall (56) so that, in the extracted configuration, it forms, together with the insert (24) a barrier to the passage of the first injection in the second injection chamber (40).

9. Method according to any of the claims from 7 to 8, wherein the cursor (60) comprises at least one tooth (72) able to catch the insert (24), so as to facilitate the phase of tautening the insert (24) and making the through holes on the insert (24).

10. Method according to any of the claims from 7 to 9, wherein the cursor (60) is positioned between the wall (56) and an attachment portion (48) of the insert (24) to the mould (4).

11. Method according to any of the claims from 7 to 10, wherein, between the first and second injection, the cursor (60) is positioned in a retracted configuration, so as to at least partially free the second injection chamber (40) and leave the holes open for the passage of the material injected during the second injection.

12. Method according to any of the previous claims, wherein the first injection is made from the side of the punch (32) so as to fill the first injection chamber (36) and to compress the insert (24) against the die (28), joining the insert (24) to the first portion (16) of the component body (12).

13. Method according to any of the claims from 7 to 12, wherein the second injection is made directly into the second injection chamber (40), from the side opposite said wall (56) defining the first and the second injection chamber (36,40).

14. Method according to any of the previous claims, wherein following the second injection, the mould (4) is opened and the component (8) made in a single piece, comprising la first portion (16), the insert (24) and the second portion (20), is expelled from the mould.

## Patentansprüche

1. Verfahren zum Spritzgießen eines Bauteils (8), bestehend aus einem Bau-teilkörper (12) und mindestens einem Einsatz (24), der geeignet ist, zumindest teilweise in dem Bauteilkörper (12) enthalten zu sein bzw. zumindest teilweise den Bauteilkörper (12) zu enthalten, wobei das Verfahren die folgenden Phasen umfasst:
- Voranordnen einer Form (4), die mindestens ein Gesenk (28) und einen Stempel (32) umfasst, die in einer geschlossenen Ausgestaltung eine erste Einspritzkammer (36) bestimmen, die jeweils ein Negativ eines ersten Abschnittes (16) des zu gießenden Bauteilkörpers (12) wiedergibt,
- Positionieren eines Einsatzes (24) im Inneren der ersten Einspritz-kammer (36),
- Voranordnen des Einsatzes (24), sodass er verwendet wird, um die erste Einspritzkammer (36) von einer zweiten Einspritzkammer (40), die ein Negativ eines zweiten Abschnittes (20) des zu gießenden Bauteilkörpers (12) wiedergibt, zu trennen, wobei die zweite Einspritzkammer (40) von dem Gesenk (28) und von dem Stempel (32) bestimmt wird und sich neben der ersten Einspritzkammer (36) befin-det,
- Vornehmen einer ersten Einspritzung von Kunststoffwerkstoff im Inne-r e n de r e r s t e n Einspritzkammer (36),
- Herstellen mindestens eines Lochs in den Einsatz (24), sodass die zweite Einspritzkammer (40) in Verbindung mit dem ersten gegossenen Abschnitt (16) gebracht wird,
- Vornehmen einer zweiten Einspritzung von Kunststoffwerkstoff im Inneren der zweiten Einspritzkammer (40), wobei das eingespritzte Material mindes-tens ein Loch durchquert, sodass der zweite gegossene Abschnitt (20) mit dem ers-ten gegossenen Abschnitt (16) verbunden wird und der in der zweiten Einspritzkammer (40) befindliche Einspritzabschnitt (24) umfasst ist, wobei
die Form (4) einen beweglichen Cursor (60) umfasst, der in der Lage ist, den Einsatz (24) in der Form (4) zu spannen,
wobei das Verfahren **dadurch gekennzeichnet ist, dass** der Cursor (60) mit mindestens einem Stift (64) an einem Arbeitskopf (68) ausgestattet ist, sodass er in der ausgefahrenen Ausgestaltung mindestens ein Loch im Einsatz (24) herstellt.

2. Verfahren nach Anspruch 1, wobei der Einsatz (24) eine Schicht aus Gewe-be und/oder Kunstleder ist, die in der Lage ist, das gegossene Bauteil (8) zumindest teilweise abzudecken.

3. Verfahren nach Anspruch 1, wobei der Einsatz (24) ein Verstärkungselement des Bauteils (8) ist, wie zum Beispiels ein Netz, eine Vorform bzw. ein Vorformling und/oder ein Metallblech.

4. Verfahren nach Anspruch 1, 2 oder 3, wobei der Einsatz (24) innerhalb der Form (4) mittels mindestens einer Saugeinrichtung (44) befestigt ist, die in der Lage ist, negativen Druck zwischen einem Befestigungsabschnitt (48) des Einsatzes (24) und dem Stempel (32) zu erzeugen.

5. Verfahren nach einem der vorhergehenden Ansprüche, wobei der Einsatz (24) mittels eines sich bewegenden Blocks (52) befestigt ist, der ihn in einem Befestigungsabschnitt (48) an den Stempel (32) klemmt.

6. Verfahren nach einem der vorhergehenden Ansprüche, wobei das Gesenk (28) eine Trennwand (56) zwischen der ersten und der zweiten Einspritzkammer (36, 40) umfasst, wobei die Wand (56) den Einsatz (24) beeinflusst und mit ihm zusammenarbeitet bzw. zusammenwirkt, um den Durchgang von eingespritztem Material von der ersten zur zweiten Kammer (36, 40) zu verhindern.

7. Verfahren nach Anspruch 6, abhängig von Anspruch 1, wobei der Cursor (60) mit der Wand (56) und dem Einsatz (24) zusammenarbeitet bzw. zusammen-wirkt, um die beiden Einspritzkammern (36, 40) zwischen einander zu isolieren.

8. Verfahren nach Anspruch 7, wobei der Cursor (60) mit der Wand (56) ausgerichtet ist bzw. fluchtet, sodass er in der ausgefahrenen Konfiguration zusammen mit dem Einsatz (24) eine Barriere für den Durchgang der ersten Einspritzung in die zweite Einspritzkammer (40) bildet.

9. Verfahren nach einem der Ansprüche 7 bis 8, wobei der Cursor (60) min-destens einen Zahn (72) umfasst, der in der Lage ist, den Einsatz (24) zu fassen, sodass die Phase des Spannens des Einsatzes (24) erleichtert wird und die Durch-gangslöcher im Einsatz (24) hergestellt werden.

10. Verfahren nach einem der Ansprüche 7 bis 9, wobei der Cursor (60) zwi-schen der Wand (56) und einem Befestigungsabschnitt (48) des Einsatzes (24) an der Form (4) positioniert ist.

11. Verfahren nach einem der Ansprüche 7 bis 10, wobei der Cursor (60) zwi-schen der ersten und zweiten Einspritzung in einer eingefahrenen Konfiguration positioniert ist, sodass er zumindest teilweise die zweite Einspritzkammer (40) freigibt und die Löcher für den Durchgang des eingespritzten Materials während der zweiten Einspritzung offen lässt.

12. Verfahren nach einem der vorhergehenden Ansprüche, wobei die erste Einspritzung von der Seite des Stempels (32) erfolgt, sodass die erste Einspritzkammer (36) gefüllt und der Einsatz (24) gegen das Gesenk (28) gepresst wird, wobei der Einsatz (24) mit dem ersten Abschnitt (16) des Bauteilkörpers (12) verbunden wird.

13. Verfahren nach einem der Ansprüche 7 bis 12, wobei die zweite Einspritzung direkt in die zweite Einspritzkammer (40) erfolgt, von der Seite gegenüber der Wand (56), die die erste und die zweite Einspritzkammer (36, 40) bestimmt.

14. Verfahren nach einem der vorhergehenden Ansprüche, wobei der zweiten Einspritzung folgend die Form (4) geöffnet wird und das in einem Stück hergestellte Bauteil (8), umfassend einen ersten Abschnitt (16), den Einsatz (24) und den zweiten Abschnitt (20), aus der Form ausgeworfen wird.

## Revendications

1. Procédé de moulage d'un composant (8) cons-titué d'un corps de composant (12) et au moins d'un insert (24) adapté pour être compris au moins en partie dans le corps de composant (12), le procédé comprenant les étapes suivantes :
- prédisposition d'un moule (4) comprenant au moins une matrice (28) et un poinçon (32) qui définissent, dans une configuration fermée, une première chambre d'injection (36) qui reproduit respectivement en négatif une première partie (16) du corps de composant (12) à mouler,
- positionnement d'un insert (24) à l'inté-rieur de la première chambre d'injection (36),
- prédisposition de l'insert (24) de sorte à l'utiliser pour séparer la première chambre d'injection (36) d'une seconde chambre d'injec-tion (40) reproduisant en négatif une seconde partie (20) du corps de composant (12) à mouler, la seconde chambre d'injection (40) étant définie par la matrice (28) et par le poinçon (32) et étant à côté de la première chambre d'injection (36),
- réalisation d'une première injection de matériau plastique à l'intérieur de la première chambre d'injection (36),
- réalisation d'au moins un trou dans ledit insert (24) de sorte à amener la seconde chambre d'injection (40) en communication avec la première partie moulée (16),
- réalisation d'une seconde injection de matériau plastique à l'intérieur de la seconde chambre d'injection (40), le matériau traversant au moins un trou de sorte à joindre la seconde partie moulée (20) à la première partie moulée (16) et à comprendre la partie d'insert (24) placée dans la seconde chambre d'injection (40), dans lequel
le moule (4) comprend un curseur mobile (60) capable de tendre l'insert (24) à l'intérieur du moule (4), le procédé étant **caractérisé en ce que** ledit curseur (60) est doté d'au moins une pince (64) sur une tête de travail (68) de sorte que dans la configuration extraite, elle réalise au moins un trou dans l'insert (24).

2. Procédé selon la revendication 1, dans lequel ledit insert (24) est une feuille de tissu et/ou un faux cuir pouvant recouvrir au moins en partie le composant moulé (8).

3. Procédé selon la revendication 1, dans lequel ledit insert (24) est un élément de renforcement du composant (8) tel qu'une maille, un moulage préliminaire et/ou feuille de métal.

4. Procédé selon la revendication 1, 2 ou 3, dans lequel ledit insert (24) est fixé à l'intérieur du moule (4) à l'aide d'au moins un dispositif d'aspiration (44) pouvant créer une pression négative entre une partie de fixation (48) de l'insert (24) et le poinçon (32).

5. Procédé selon l'une quelconque des revendi-cations précédentes, dans lequel l'insert (24) est attaché à l'aide d'un bloc mobile (52) qui le fixe par serrage au poinçon (32) sur une partie de fixation (48).

6. Procédé selon l'une quelconque des revendi-cations précédentes, dans lequel la matrice (28) comprend une paroi de séparation (56) entre la première et la seconde chambre d'injection (36, 40), ladite paroi (56) influençant l'insert (24) et coopérant avec lui pour éviter le passage de matériau injecté de la première à la seconde chambre (36, 40).

7. Procédé selon la revendication 6 dépendant de la revendication 1, dans lequel le curseur (60) coopère avec la paroi (56) et l'insert (24) pour isoler les deux chambres d'injection (36, 40) entre elles.

8. Procédé selon la revendication 7, dans lequel le curseur (60) est aligné sur la paroi (56) de sorte que dans la configuration extraite, il forme conjointement avec l'insert (24) une barrière au passage de la première injection dans la seconde chambre d'injection (40).

9. Procédé selon l'une quelconque des revendi-cations 7 à 8, dans lequel le curseur (60) comprend au moins une dent (72) pouvant attraper l'insert (24) de sorte à faciliter la phase de tension de l'insert (24) et de réalisation des trous débouchants sur l'insert (24).

10. Procédé selon l'une quelconque des revendi-cations 7 à 9, dans lequel le curseur (60) est positionné entre la paroi (56) et une partie de fixation (48) de l'insert (24) au moule (4).

11. Procédé selon l'une quelconque des revendi-cations 7 à 10, dans lequel le curseur (60) est positionné dans une configuration rétractée entre la première et la seconde injection de sorte à libérer au moins partiellement la seconde chambre d'injection (40) et à laisser les trous ouverts pour le passage du matériau injecté pendant la seconde injection.

12. Procédé selon l'une quelconque des revendi-cations précédentes, dans lequel la première injection est réalisée depuis le côté du poinçon (32) de sorte à remplir la première chambre d'injection (36) et à comprimer l'insert (24) contre la matrice (28), ce qui assemble l'insert (24) à la première partie (16) du corps de composant (12).

13. Procédé selon l'une quelconque des revendi-cations 7 à 12, dans lequel la seconde injection est réalisée directement dans la seconde chambre d'injection (40) depuis le côté opposé à ladite paroi (56) définissant la première et la seconde chambre d'injection (36, 40).

14. Procédé selon l'une quelconque des revendi-cations précédentes, dans lequel à la suite de la seconde injection, le moule (4) est ouvert et le composant (8) fabriqué en une seule pièce comprenant la première partie (16), l'insert (24) et la seconde partie (20), est expulsé du moule.
